(19) Europäisches Patentamt European Patent Office Office européen des brevets

(11) **EP 1 863 234 A1**

(12) **EUROPEAN PATENT APPLICATION**

(43) Date of publication:
05.12.2007 Bulletin 2007/49

(51) Int Cl.:
*H04L 12/56* (2006.01)    *H04L 12/46* (2006.01)

(21) Application number: 07010676.0

(22) Date of filing: 30.05.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 01.06.2006 US 421679

(71) Applicant: FUJITSU LIMITED
Kawasaki-shi,
Kanagawa 211-8588 (JP)

(72) Inventors:
• Miyoshi, Takashi
San Jose
California 95128 (US)
• Nakagawa, Yukihiro
Cupertino
California 95014 (US)
• Shimizu, Takeshi
Sunnyvale
California 94085 (US)

(74) Representative: HOFFMANN EITLE
Patent- und Rechtsanwälte
Arabellastrasse 4
81925 München (DE)

(54) **System and method for managing forwarding database resources in a switching environment**

(57) In particular embodiments of the present invention, a method for switching is provided. In particular embodiments, the method includes receiving a packet at an input port of a switch, the packet associated with a virtual local area network identifier (VLAN ID) and a Media Access Control (MAC) address, the switch comprising a forwarding database and a plurality of output ports. The method also includes masking the VLAN ID to create a masked VLAN ID comprising fewer bits than the VLAN ID associated with the packet. The method further includes applying a function to the MAC address and the masked VLAN ID to generate an index, and, at the forwarding database, using the index to identify an output port of the switch. The method also includes transmitting the packet from the identified output port.

FIG. 8

# Description

## TECHNICAL FIELD OF THE INVENTION

This invention relates generally to communication systems and more particularly to managing forwarding database resources in a switching environment.

## BACKGROUND OF THE INVENTION

High-speed serial interconnects have become more common in communications environments, and, as a result, the role that switches play in these environments has become more important. Traditional switches do not provide the scalability and switching speed typically needed to support these interconnects.

## SUMMARY OF THE INVENTION

Particular embodiments of the present invention may reduce or eliminate disadvantages and problems traditionally associated with shared memory resources in a switching environment.

In particular embodiments of the present invention, a method for switching is provided. In particular embodiments, the method includes receiving a packet at an input port of a switch, the packet associated with a virtual local area network identifier (VLAN ID) and a Media Access Control (MAC) address, the switch comprising a forwarding database and a plurality of output ports. The method also includes masking the VLAN ID to create a masked VLAN ID comprising fewer bits than the VLAN ID associated with the packet. The method further includes applying a function to the MAC address and the masked VLAN ID to generate an index, and, at the forwarding database, using the index to identify an output port of the switch. The method also includes transmitting the packet from the identified output port.

Particular embodiments of the present invention provide one or more advantages. In particular embodiments, a switch may store routing information in its forwarding database more efficiently. In particular embodiments, by storing routing information in its forwarding database more efficiently, the switch may store more routing information in its forwarding database. In particular embodiments, the switch may store routing information in its forwarding database more efficiently by taking into account a network's configuration and by intelligently reducing the size of the stored routing information. Certain embodiments provide all, some, or none of these technical advantages, and certain embodiments provide one or more other technical advantages readily apparent to those skilled in the art from the figures, descriptions, and claims included herein.

## BRIEF DESCRIPTION OF THE DRAWINGS

To provide a more complete understanding of the present invention and the features and advantages thereof, reference is made to the following description, taken in conjunction with the accompanying drawings, in which:

FIGURE 1 illustrates an example system area network;
FIGURE 2 illustrates an example switch of a system area network;
FIGURE 3 illustrates an example switch core of a switch;
FIGURE 4 illustrates an example stream memory of a switch core logically divided into blocks;
FIGURES 5 and 6 illustrate portions of example forwarding databases;
FIGURE 7 illustrates a portion of another example forwarding database according to a particular embodiment of the invention; and
FIGURE 8 is a flowchart illustrating an example method for managing forwarding database resources according to a particular embodiment of the invention.

## DESCRIPTION OF EXAMPLE EMBODIMENTS

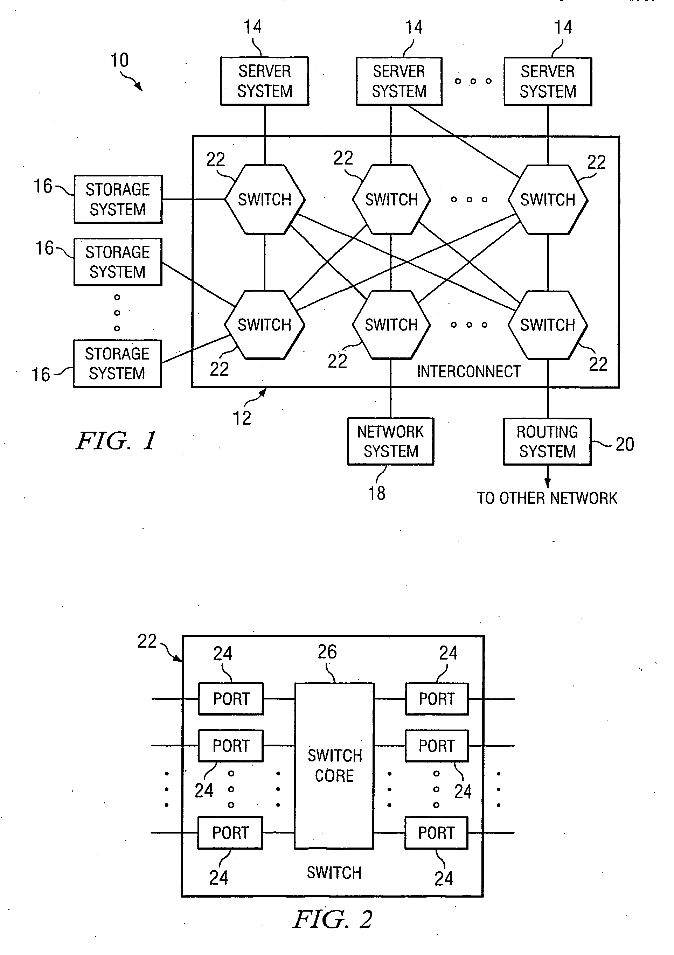

FIGURE 1 illustrates an example system area network 10 that includes a serial or other interconnect 12 supporting communication among one or more server systems 14; one or more storage systems 16; one or more network systems 18; and one or more routing systems 20 coupling interconnect 12 to one or more other networks, which include one or more local area networks (LANs), wide area networks (WANs), or other networks. Server systems 14 each include one or more central processing units (CPUs) and one or more memory units. Storage systems 16 each include one or more channel adaptors, one or more disk adaptors, and one or more CPU modules. Interconnect 12 includes one or more switches 22, which, in particular embodiments, include Ethernet switches, as described more fully below. The components of system area network 10 are coupled to each other using one or more links, each of which includes one or more computer buses, local area networks (LANs), metropolitan area networks (MANs), wide area networks (WANs), portions of the Internet, or other wireline, optical, wireless, or other links. Although system area network 10 is described and illustrated as including particular components coupled to each other in a particular configuration, the present invention contemplates any suitable system area network including any suitable components coupled to each other in any suitable configuration.

FIGURE 2 illustrates an example switch 22 of system area network 10. Switch 22 includes multiple ports 24 and a switch core 26. Ports 24 are each coupled to switch core 26 and a component of system area network 10 (such as a server system 14, a storage system 16, a network system 18, a routing system 20, or another switch 22). A first port 24 receives a packet from a first component of system area network 10 and communicates the packet to switch core 26 for switching to a second port 24, which communicates the packet to a second component of system area network 10. Reference to a packet can include a packet, datagram, frame, or other unit of data, where appropriate. Switch core 26 receives a packet from a first port 24 and switches the packet to one or more second ports 24, as described more fully below. In particular embodiments, switch 22 includes an Ethernet switch. In particular embodiments, switch 22 can switch packets at or near wire speed.

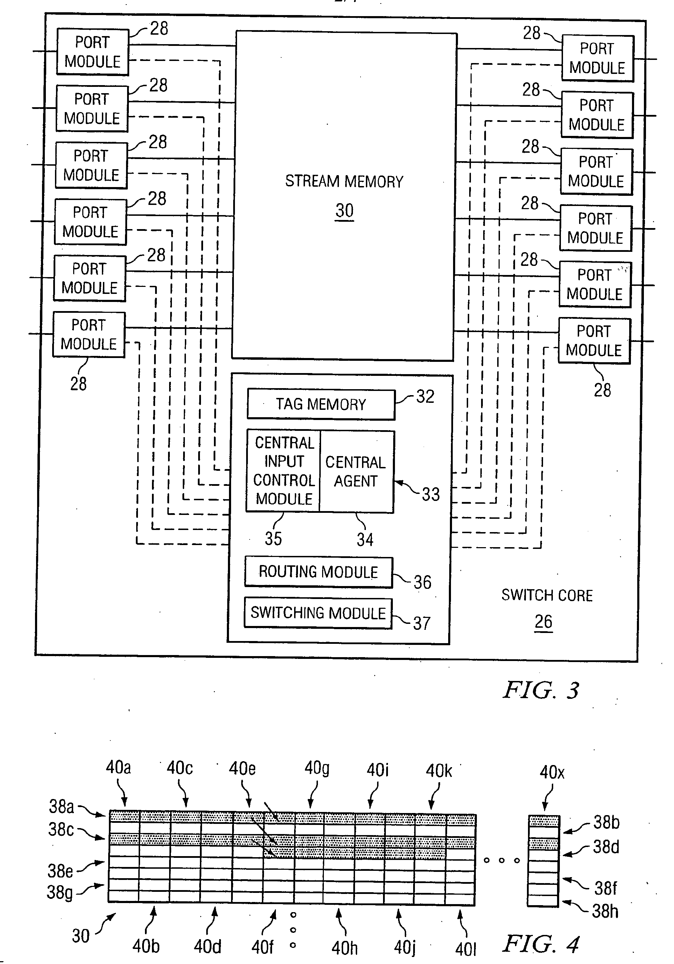

FIGURE 3 illustrates an example switch core 26 of switch 22. Switch core 26 includes twelve port modules 28, stream memory 30, tag memory 32, input control and central agent (ICCA) 33, routing module 36, and switching module 37. The components of switch core 26 are coupled to each other using buses or other links. In particular embodiments, switch core 26 is embodied in a single IC. In a default mode of switch core 26, a packet received by switch core 26 from a first component of system area network 10 can be communicated from switch core 26 to one or more second components of system area network 10 before switch core 26 receives the entire packet. In particular embodiments, cut-through forwarding provides one or more advantages (such as reduced latency, reduced memory requirements, and increased throughput) over store-and-forward techniques. Switch core 26 can be configured for different applications. As an example and not by way of limitation, switch core 26 can be configured for an Ethernet switch 22 (which includes a ten-gigabit Ethernet switch 22 or an Ethernet switch 22 in particular embodiments); an INFINIBAND switch 22; a 3GIO switch 22; a HYPERTRANSPORT switch 22; a RAPID IO switch 22; a proprietary backplane switch 22 for storage systems 16, network systems 18, or both; or other switch 22.

A port module 28 provides an interface between switch core 26 and a port 24 of switch 22. Port module 28 is communicatively coupled to port 24, stream memory 30, tag memory 32, ICCA 33, routing table 36, and switching module 37. In particular embodiments, port module 28 includes both input logic (which is used for receiving a packet from a component of system area network 10 and writing the packet to stream memory 30) and output logic (which is used for reading a packet from stream memory 30 and communicating the packet to a component of system area network 10). As an alternative, in particular embodiments, port module 28 includes only input logic or only output logic. Reference to a port module 28 can include a port module 28 that includes input logic, output logic, or both, where appropriate. Port module 28 can also include an input buffer for inbound flow control. In an Ethernet switch 22, a pause function can be used for inbound flow control, which can take time to be effective. The input buffer of port module 28 can be used for temporary storage of a packet that is sent before the pause function stops incoming packets. Because the input buffer would be unnecessary if credits are exported for inbound flow control, as would be the case in an INFINIBAND switch 22, the input buffer is optional. In particular embodiments, the link coupling port module 28 to stream memory 30 includes two links: one for write operations (which include operations of switch core 26 in which data is written from a port module 28 to stream memory 30) and one for read operations (which include operations of switch core 26 in which data is read from stream memory 30 to a port module 28). Each of these links can carry thirty-six bits, making the data path between port module 28 and stream memory 30 thirty-six bits wide in both directions.

A packet received by a first port module 28 from a first component of system area network 10 is written to stream memory 30 from first port module 28 and later read from stream memory 30 to one or more second port modules 28 for communication from second port modules 28 to one or more second components of system area network 10. Reference to a packet being received by or communicated from a port module 28 can include the entire packet being received by or communicated from port module 28 or only a portion of the packet being received by or communicated from port module 28, where appropriate. Similarly, reference to a packet being written to or read from stream memory 30 can include the entire packet being written to or read from stream memory 30 or only a portion of the packet being written to or read from stream memory 30, where appropriate. Any port module 28 that includes input logic (an "input port module") can write to stream memory 30, and any port module 28 that includes output logic (an "output port module") can read from stream memory 30. In particular embodiments, a port module 28 may include both input logic and output logic and may thus be both an input port module and an output port module. In particular embodiments, the sharing of stream memory 30 by port modules 28 eliminates head-of-line blocking (thereby increasing the throughput of switch core 26), reduces memory requirements associated with switch core 26, and enables switch core 26 to more efficiently handle changes in load conditions at port modules 28.

Stream memory 30 of switch core 26 is logically divided into blocks 38, which are further divided into words 40, as illustrated in FIGURE 4. A row represents a block 38, and the intersection of the row with a column represents a word 40 of block 38. In particular embodiments, stream memory 30 is divided into 1536 blocks 38, each block 38 includes twenty-four words 40, and a word 40 includes seventy-two bits. Although stream memory 30 is described and illustrated as being divided into a particular number of blocks 38 that are divided into a particular number of words 40 including a particular number of bits, the present invention contemplates stream memory 30 being divided into any suitable number of blocks 38 that are divided into any suitable number of words 40 including any suitable number of bits. Packet size can vary from packet to packet. A packet that includes as many bits as or fewer bits than a block 38 can be written to one block 38, and a packet that includes more bits than a block 38 can be written to more than one block 38, which need not be contiguous with each other.

When writing to or reading from a block 38, a port module 28 can start at any word 40 of block 38 and write to or read from words 40 of block 38 sequentially. Port module 28 can also wrap around to a first word 40 of block 38 as it writes to or reads from block 38. A block 38 has an address that can be used to identify block 38 in a write operation or a read operation, and an offset can be used to identify a word 40 of block 38 in a write operation or a read operation. As an example, consider a packet that is 4176 bits long. The packet has been written to fifty-eight words 40, starting at word 40f of block 38a and continuing to word 40k of block 38d, excluding block 38b. In the write operation, word 40f of block 38a is identified by a first address and a first offset, word 40f of block 38c is identified by a second address and a second offset, and word 40f of block 38d is identified by a third address and a third offset. The packet can also be read from stream memory 30 starting at word 40f of block 38a and continuing to word 40k of block 38d, excluding block 38b. In the read operation, word 40f of block 38a can be identified by the first address and the first offset, word 40f of block 38c can be identified by the second address and the second offset, and word 40f of block 38d can be identified by the third address and the third offset.

Tag memory 32 includes multiple linked lists that can each be used, by, for example, central input control module 35, to determine a next block 38 to which first port module 28 may write and, by, for example, second port modules 28, to determine a next block 38 from which second port modules 28 may read. Tag memory 32 also includes a linked list that can be used by central agent 34 to determine a next block 38 that can be made available to a port module 28 for a write operation from port module 28 to stream memory 30, as described more fully below. Tag memory 32 includes multiple entries, at least some of which each correspond to a block 38 of stream memory 30. Each block 38 of stream memory 30 has a corresponding entry in tag memory 32. An entry in tag memory 32 can include a pointer to another entry in tag memory 32, resulting in a linked list.

Entries in tag memory 32 corresponding to blocks 38 that are available to a port module 28 for write operations from port module 28 to stream memory 30 can be linked together such that a next block 38 to which a port module 28 may write can be determined using the linked entries. When a block 38 is made available to a port module 28 for write operations from port module 28 to stream memory 30, an entry in tag memory 32 corresponding to block 38 can be added to the linked list being used to determine a next block 38 to which port module 28 may write.

A linked list in tag memory 32 being used to determine a next block 38 to which a first port module 28 may write can also be used by one or more second port modules 28 to determine a next block 38 from which to read. As an example, consider the linked list described above. A first portion of a packet has been written from first port module 28 to first block 38, a second portion of the packet has been written from first port module 28 to second block 38, and a third and final portion of the packet has been written from first port module 28 to third block 38. An end mark has also been written to third block 38 to indicate that a final portion of the packet has been written to third block 38. A second port module 28 reads from first block 38 and, while second port module 28 is reading from first block 38, uses the pointer in the first entry to determine a next block 38 from which to read. The pointer refers second port module 28 to second block 38, and, when second port module 28 has finished reading from first block 38, second port module 28 reads from second block 38. While second port module 28 is reading from second block 38, second port module 28 uses the pointer in the second entry to determine a next block 38 from which to read. The pointer refers second port module 28 to third block 38, and, when second port module 28 has finished reading from second block 38, second port module 28 reads from third block 38. Second port module 28 reads from third block 38 and, using the end mark in third block 38, determines that a final portion of the packet has been written to third block 38. While a linked list in tag memory 32 cannot be used by more than one first port module 28 to determine a next block 38 to which to write, the linked list can be used by one or more second port modules 28 to determine a next block 38 from which to read.

Different packets can have different destinations, and the order in which packets make their way through stream memory 30 need not be first in, first out (FIFO). As an example, consider a first packet received and written to one or more first blocks 38 before a second packet is received and written to one or more second blocks 38. The second packet could be read from stream memory 30 before the first packet, and second blocks 38 could become available for other write operations before first blocks 38. In particular embodiments, a block 38 of stream memory 30 to which a packet has been written can be made available to a port module 28 for a write operation from port module 28 to block 38 immediately after the packet has been read from block 38 by all port modules 28 that are designated port modules 28 of the packet. A designated port module 28 of a packet includes a port module 28 coupled to a component of system area network 10, downstream from switch core 26, that is a final or intermediate destination of the packet.

Using credits to manage write operations may offer particular advantages. For example, using credits can facilitate cut-through forwarding by switch core 26, which reduces latency, increases throughput, and reduces memory requirements associated with switch core 26. Using credits to manage write operations can also eliminate head-of-line blocking and provide greater flexibility in the distribution of memory resources among port modules 28 in response to changing load conditions at port modules 28. A credit corresponds to a block 38 of stream memory 30 and can be used by a port module 28 to write to block 38. A credit can be allocated to a port module 28 from a pool of credits, which is managed by central agent 34. Reference to a credit being allocated to a port module 28 includes a block 38 corresponding to the credit being made available to port module 28 for a write operation from port module 28 to block 38, and vice versa.

A credit in the pool of credits can be allocated to any port module 28 and need not be allocated to any particular port module 28. A port module 28 can use only a credit that is available to port module 28 and cannot use a credit that is available to another port module 28 or that is in the pool of credits. A credit is available to port module 28 if the credit has been allocated to port module 28 and port module 28 has not yet used the credit. A credit that has been allocated to port module 28 is available to port module 28 until port module 28 uses the credit. A credit cannot be allocated to more than one port module 28 at a time, and a credit cannot be available to more than one port module 28 at the same time. In particular embodiments, when a first port module 28 uses a credit to write a packet to a block 38 corresponding to the credit, the credit is returned to the pool of credits immediately after all designated port modules 28 of the packet have read the packet from block 38.

ICCA 33 includes central agent 34 and central input control module 35. Central agent 34 is operable to allocate credits to port modules 28 from the pool of credits. As an example, central agent 34 can make an initial allocation of a predetermined number of credits to a port module 28. Central agent 34 can make this initial allocation of credits to port module 28, for example, at the startup of switch core 26 or in response to switch core 26 being reset. As another example, central agent 34 can allocate a credit to a port module 28 to replace another credit that port module 28 has used. In particular embodiments, when port module 28 uses a first credit, port module 28 notifies central agent 34 that port module 28 has used the first credit, and, in response to port module 28 notifying central agent 34 that port module 28 has used the first credit, central agent 34 allocates a second credit to port module 28 to replace the first credit, if, for example, the number of blocks 38 that are being used by port module 28 does not meet or exceed an applicable limit. In particular embodiments, central agent 34 can store port-allocated credits in central input control module 35 of ICCA 33 until requested by port modules 28 after the receipt of a packet.

It should be noted that reference to a block 38 that is being used by a port module 28 includes a block 38 to which a packet has been written from port module 28 and from which all designated port modules 28 of the packet have not read the packet. By replacing, up to an applicable limit, credits used by port module 28, the number of credits available to port module 28 can be kept relatively constant and, if the load conditions at port module 28 increase, more blocks 38 can be supplied to port module 28 in response to the increase in load conditions at port module 28. A limit may be applied in certain circumstances to the number of blocks used by port module 28, which may prevent port module 28 from using too many blocks 38 and thereby use up too many shared memory resources. The limit can be controlled dynamically based on the number of credits in the pool of credits. If the number of credits in the pool of credits decreases, the limit can also decrease. The calculation of the limit and the process according to which credits are allocated to port module 28 can take place out of the critical path of packets through switch core 26, which increases the switching speed of switch core 26.

A linked list in tag memory 32 can be used by central agent 34 to determine a next credit that can be allocated to a port module 28. The elements of the linked list can include entries in tag memory 32 corresponding to blocks 38 that in turn correspond to credits in the pool of credits. As an example, consider four credits in the pool of credits. A first credit corresponds to a first block 38, a second credit corresponds to a second block 38, a third credit corresponds to a third block 38, and a fourth credit corresponds to a fourth block 38. A first entry in tag memory 32 corresponding to first block 38 includes a pointer to second block 38, a second entry in tag memory 32 corresponding to second block 38 includes a pointer to third block 38, and a third entry in tag memory 32 corresponding to third block 38 includes a pointer to fourth block 38. Central agent 34 allocates the first credit to a port module 28 and, while central agent 34 is allocating the first credit to a port module 28, uses the pointer in the first entry to determine a next credit to allocate to a port module 28. The pointer refers central agent 34 to second block 38, and, when central agent 34 has finished allocating the first credit to a port module 28, central agent 34 allocates the second credit to a port module 28. While central agent 34 is allocating the second credit to a port module 28, central agent 34 uses the pointer in the second entry to determine a next credit to allocate to a port module 28. The pointer refers central agent 34 to third block 38, and, when central agent 34 has finished allocating the second credit to a port module 28, central agent 34 allocates the third credit to a port module 28. While central agent 34 is allocating the third credit to a port module 28, central agent 34 uses the pointer in the third entry to determine a next credit to allocate to a port module 28. The pointer refers central agent 34 to fourth block 38, and, when central agent 34 has finished allocating the third credit to a port module 28, central agent allocates the fourth credit to a port module 28.

When a credit corresponding to a block 38 is returned to the pool of credits, an entry in tag memory 32 corresponding to block 38 can be added to the end of the linked list that central agent 34 is using to determine a next credit to allocate to a port module 28. As an example, consider the linked list described above. If the fourth entry is the last element of the linked list, when a fifth credit corresponding to a fifth block 38 is added to the pool of credits, the fourth entry can be modified to include a pointer to a fifth entry in tag memory 32 corresponding to fifth block 38. Because entries in tag memory 32 each correspond to a block 38 of stream memory 30, a pointer that points to a block 38 also points to an entry in tag memory 32.

When a port module 28 receives an incoming packet, port module 28 determines whether enough credits are available to port module 28 to write the packet to stream memory 30. Port module 28 may do so, for example, by reading a counter at central agent 34 indicating the number of credits available to the port module 28 to write. Alternatively, port module 28 may receive this information automatically from central agent 34. In particular embodiments, if enough credits are available to port module 28 to write the packet to stream memory 30, port module 28 can write the packet to stream memory 30 using one or more credits. In particular embodiments, if enough credits are not available to port module 28 to write the packet to stream memory 30, port module 28 can write the packet to an input buffer and later, when enough credits are available to port module 28 to write the packet to stream memory 30, write the packet to stream memory 30 using one or more credits. As an alternative to port module 28 writing the packet to an input buffer, port module 28 can drop the packet. In particular embodiments, if enough credits are available to port module 28 to write only a portion of the packet to stream memory 30, port module 28 can write to stream memory 30 the portion of the packet that can be written to stream memory 30 using one or more credits and write one or more other portions of the packet to an input buffer. Later, when enough credits are available to port module 28 to write one or more of the other portions of the packet to stream memory 30, port module 28 can write one or more of the other portions of the packet to stream memory 30 using one or more credits. In particular embodiments, delayed cut-through forwarding, like cut-through forwarding, provides one or more advantages (such as reduced latency, reduced memory requirements, and increased throughput) over store-and-forward techniques. Reference to a port module 28 determining whether enough credits are available to port module 28 to write a packet to stream memory 30 includes port module 28 determining whether enough credits are available to port module 28 to write the entire packet to stream memory 30, write only a received portion of the packet to stream memory 30, or write at least one portion of the packet to stream memory 30, where appropriate.

In particular embodiments, the length of an incoming packet cannot be known until the entire packet has been received. In these embodiments, a maximum transmission unit (according to an applicable set of standards) can be used to determine whether enough credits are available to a port module 28 to write an incoming packet that has been received by port module 28 to stream memory 30. According to a set of standards published by the Institute of Electrical and Electronics Engineers (IEEE), the maximum transmission unit (MTU) of an Ethernet frame is 1500 bytes. According to a de facto set of standards, the MTU of an Ethernet frame is nine thousand bytes. As an example and not by way of limitation, consider a port module 28 that has received only a portion of an incoming packet. Port module 28 uses an MTU (according to an applicable set of standards) to determine whether enough credits are available to port module 28 to write the entire packet to stream memory 30. Port module 28 can make this determination by comparing the MTU with the number of credits available to port module 28. If enough credits are available to port module 28 to write the entire packet to stream memory 30, port module 28 can write the received portion of the packet to stream memory 30 using one or more credits and write one or more other portions of the packet to stream memory 30 using one or more credits when port module 28 receives the one or more other portions of the packet.

As discussed above, central agent 34 can monitor the number of credits available to port module 28 using a counter and provide this information to port module 28 automatically or after port module 28 requests the information. When central agent 34 allocates a credit to port module 28, central agent 34 increments the counter by an amount, and, when port module 28 notifies central agent 34 that port module 28 has used a credit, central agent 34 decrements the counter by an amount. The current value of the counter reflects the current number of credits available to port module 28, and central agent 34 can use the counter to determine whether to allocate one or more credits to port module 28. Central agent 34 can also monitor the number of blocks 38 that are being used by port module 28 using a second counter. When port module 28 notifies central agent 34 that port module 28 has written to a block 38, central agent increments the second counter by an amount and, when a block 38 to which port module 28 has written is released and a credit corresponding to block 38 is returned to the pool of credits, central agent decrements the second counter by an amount. Additionally or alternatively, central input control module 35 may also monitor the number of credits available to port modules 28 using its own counter(s).

The number of credits that are available to a port module 28 can be kept constant, and the number of blocks 38 that are being used by port module 28 can be limited. The limit can be changed in response to changes in load conditions at port module 28, one or more other port module 28, or both. In particular embodiments, the number of blocks 38 that are being used by a port module 28 is limited according to a dynamic threshold that is a function of the number of credits in the pool of credits. An active port module 28, in particular embodiments, includes a port module 28 that is using one or more blocks 38. Reference to a port module 28 that is using a block 38 includes a port module 28 that has written at least one packet to stream memory 30 that has not been read from stream memory 30 to all designated port modules 28 of the packet. A dynamic threshold can include a fraction of the number of credits in the pool of credits calculated using the following formula, in which α equals the number of port modules 28 that are active and p is a parameter:

$$\frac{\rho}{1 + (\rho \times \alpha)}$$

A number of credits in the pool of credits can be reserved to prevent central agent 34 from allocating a credit to a port module 28 if the number of blocks 38 that are each being used by a port module 28 exceeds an applicable limit, which can include the dynamic threshold described above. Reserving one or more credits in the pool of credits can provide a cushion during a transient period associated with a change in the number of port modules 28 that are active. The fraction of credits that are reserved is calculated using the following formula, in which α equals the number of active port modules 28 and p is a parameter:

$$\frac{1}{1 + (\rho \times \alpha)}$$

According to the above formulas, if one port module 28 is active and p is two, central agent 34 reserves one third of the credits and may allocate up to two thirds of the credits to port module 28; if two port modules 28 are active and p is one, central agent 34 reserves one third of the credits and may allocate up to one third of the credits to each port module 28 that is active; and if twelve port modules 28 are active and p is 0.5, central agent 34 reserves two fourteenths of the credits and may allocate up to one fourteenth of the credits to each port module 28 that is active. Although a particular limit is described as being applied to the number of blocks 38 that are being used by a port module 28, the present invention contemplates any suitable limit being applied to the number of blocks 38 that are being used by a port module 28.

In particular embodiments, central input control module 35 of ICCA 33 stores the credits allocated to particular port modules 28 by central agent 34 and can manage port-allocated credits using a linked list. Central input control module 35 can forward port-allocated credits to a particular, enabled port module 28 after the port module 28 requests a credit from central input control module 35. In particular embodiments, port-allocated credits are forwarded by central input control module 35 to enabled port modules 38 through switching module 37. When a port is disabled, central input control module 35 and switching module 37 may work together to collect and release the credits allocated to the disabled port. Although the illustrated embodiment includes central input control module 35 in ICCA 33, in alternative embodiments, central input control module 35 may reside in any suitable location, such as, for example, in central agent 34 or in port modules 28 themselves.

When a first port module 28 associated with an enabled port writes a packet to stream memory 30, first port module 28 can communicate to routing module 36 through switching module 37 information from the header of the packet (such as one or more destination addresses) that routing module 36 can use to identify one or more second port modules 28 that are designated port modules 28 of the packet. First port module 28 can also communicate to routing module 36 an address of a first block 38 to which the packet has been written and an offset that together can be used by second port modules 28 to read the packet from stream memory 30. The combination of this address and offset (or any other information used to identify the location at which the contents of a packet have been stored) will be referred to herein as a "pointer." Routing module 36 can identify second port modules 28 using one or more routing tables and the information from the header of the packet and, after identifying second port modules 28, communicate the pointer to the first block 38 to each second port module 28, which second port module 28 can add to an output queue, as described more fully below. In particular embodiments, routing module 36 can communicate information to second port modules 28 through ICCA 33.

In particular embodiments, switching module 37 is coupled between port modules 28 and both routing module 36 and ICCA 33 to facilitate the communication of information between port modules 28 and ICCA 33 or routing module 36 when a port is enabled. When a port is disabled, switching module 37 is operable to facilitate the collection and release of port-allocated credits associated with the disabled port. It should be noted that, although a single switching module 37 is illustrated, switching module 37 may represent any suitable number of switching modules. In addition, switching module 37 may be shared by any suitable number of port modules 28. Furthermore, the functionality of switching module 37 may be incorporated in one or more of the other components of the switch.

An output port module 28 can include one or more output queues that are used to queue pointers for packets that have been written to stream memory 30 and that are to be communicated from switch core 26 through the associated port module 28. When a packet is written to stream memory 30, routing module 36 may identify designated port modules, and a pointer associated with the packet may be added to an output queue of each port module 28 from which the packet is to be communicated. An output queue of a designated port module 28 can correspond to a variety of different variables.

In particular embodiments, a port module 28 includes a memory structure that can include one or more linked lists that port module 28 can use, along with one or more registers, to determine a next packet to read from stream memory 30. The memory structure includes multiple entries, at least some of which each correspond to a block 38 of stream memory 30. Each block 38 of stream memory 30 has a corresponding entry in the memory structure. An entry in the memory structure can include a pointer to another entry in the memory structure, resulting in a linked list. A port module 28 also includes one or more registers that port module 28 can also use to determine a next packet to read from stream memory 30. A register includes a read pointer, a write pointer, and an offset. The read pointer can point to a first block 38 to which a first packet has been written, the write pointer can point to a first block 38 to which a second packet (which could be the same packet as or a packet other than the first packet) has been written, and the offset can indicate a first word 40 to which the second packet has been written. Because entries in the memory structure each correspond to a block 38 of stream memory 30, a pointer that points to a block 38 also points to an entry in the memory structure.

Port module 28 can use the read pointer to determine a next packet to read from stream memory 30 (corresponding to the "first" packet above). Port module 28 can use the write pointer to determine a next entry in the memory structure to which to write an offset. Port module 28 can use the offset to determine a word 40 of a block 38 at which to start reading from block 38, as described further below. Port module 28 can also use the read pointer and the write pointer to determine whether more than one packet is in the output queue. If output queue is not empty and the write pointer and the read pointer both point to the same block 38, there is only one packet in the output queue. If there is only one packet in the output queue, port module 28 can determine a next packet to read from stream memory 30 and read the next packet from stream memory 30 without accessing the memory structure.

If a first packet is added to the output queue when there are no packets in the output queue, (1) the write pointer in the register is modified to point to a first block 38 to which the first packet has been written, (2) the offset is modified to indicate a first word 40 to which the first packet has been written, and (3) the read pointer is also modified to point to first block 38 to which the first packet has been written. If a second packet is added to the output queue before port module 28 reads the first packet from stream memory 30, (1) the write pointer is modified to point to a first block 38 to which the second packet has been written, (2) the offset is written to a first entry in the memory structure corresponding to first block 38 to which the first packet has been written and then modified to indicate a first word 40 to which the second packet has been written, and (3) a pointer in the first entry is modified to point to first block 38 to which the second packet has been written. The read pointer is left unchanged such that, after the second packet is added to the output queue, the read pointer still points to first block 38 to which the first packet has been written. As described more fully below, the read pointer is changed when port module 28 reads a packet in the output queue from stream memory 30. If a third packet is added to the output queue before port module 28 reads the first packet and the second packet from stream memory 30, (1) the write pointer is modified to point to a first block 38 to which the third packet has been written, (2) the offset is written to a second entry in the memory structure corresponding to first block 38 to which the second packet has been written and modified to indicate a first word 40 to which the third packet has been written, and (3) a pointer in the second entry is modified to point to first block 38 to which the third packet has been written. The read pointer is again left unchanged such that, after the third packet is added to the output queue, the read pointer still points to first block 38 to which the first packet has been written. Port module 28 can use the output queue to determine a next packet to read from stream memory 30.

If a port module 28 includes more than one output queue, an algorithm can be used for arbitration among the output queues. Arbitration among multiple output queues can include determining a next output queue to use to determine a next packet to read from stream memory 30. Arbitration among multiple output queues can also include determining how many packets in a first output queue to read from stream memory 30 before using a second output queue to determine a next packet to read from stream memory 30. The present invention contemplates any suitable algorithm for arbitration among multiple output queues. As an example and not by way of limitation, according to an algorithm for arbitration among multiple output queues of a port module 28, port module 28 accesses output queues that are not empty in a series of rounds. In a round, port module 28 successively accesses the output queues in a predetermined order and, when port module 28 accesses an output queue, reads one or more packets in the output queue from stream memory 30. The number of packets that port module 28 reads from an output queue in a round can be the same as or different from the number of packets that port module 28 reads from each of one or more other output queues of port module 28 in the same round. In particular embodiments, the number of packets that can be read from an output queue in a round is based on a quantum value that defines an amount of data according to which more packets can be read from the output queue if smaller packets are in the output queue and fewer packets can be read from the output queue if larger packets are in the output queue, which can facilitate fair sharing of an output link of port module 28.

As discussed above, packets may be routed through a switch from particular input ports to particular output ports. For example, input port module 28 may receive an incoming packet, store the packet in stream memory 30, and forward information associated with the packet (for example, header information) to routing module 36. Routing module 36 may use, for example, a table to assign a particular output port to a particular packet based on the information associated with the packet that routing module 36 receives.

In particular embodiments, the table that routing module 36 uses to route packets may include, be included in, or otherwise be associated with a forwarding database. A forwarding database in a layer two Ethernet switch comprises a table that stores routing information associated with different Media Access Control (MAC) addresses. The routing information typically includes one or more output ports of the switch and other information such as, for example, a time stamp and miscellaneous flags. The MAC address may identify, for example, the destination address for the packet. MAC addresses are typically large (for example, forty-eight bits). Thus, forwarding databases may use a hash function to produce a smaller, unique identifier for each MAC address. It should be noted that a forwarding database need not be associated with routing module 36 and may be used by any other suitable component of a switch to route packets.

In addition to the parameters discussed above, forwarding databases may also include routing information associated with a virtual local area network (VLAN) with which a packet is associated. A VLAN is a logically independent local area network, which may or may not correspond to a physical local area network. Network devices can be a part of multiple VLANs or of only one VLAN, and a switch can support one or more VLANs (sometimes dedicating one or more ports to a particular VLAN). As VLANs have been introduced to communication systems, switch designers have encountered a demand to design a switch that can route packets based on the VLAN identifiers (VLAN IDs) included in the packets (or otherwise associated with the packets). VLAN IDs typically comprise twelve bits, and each VLAN in the network may be associated with a unique VLAN ID. Packets associated with a VLAN may include the VLAN's unique identifier in their header. Some packets may be associated with a VLAN ID by being received at a particular input port of the switch, if, for example, the packet does not include a VLAN ID and the input port is associated with a VLAN ID. To address demand for a switch that can route packets based on VLAN IDs, switch designers have introduced different forwarding database designs to meet this demand.

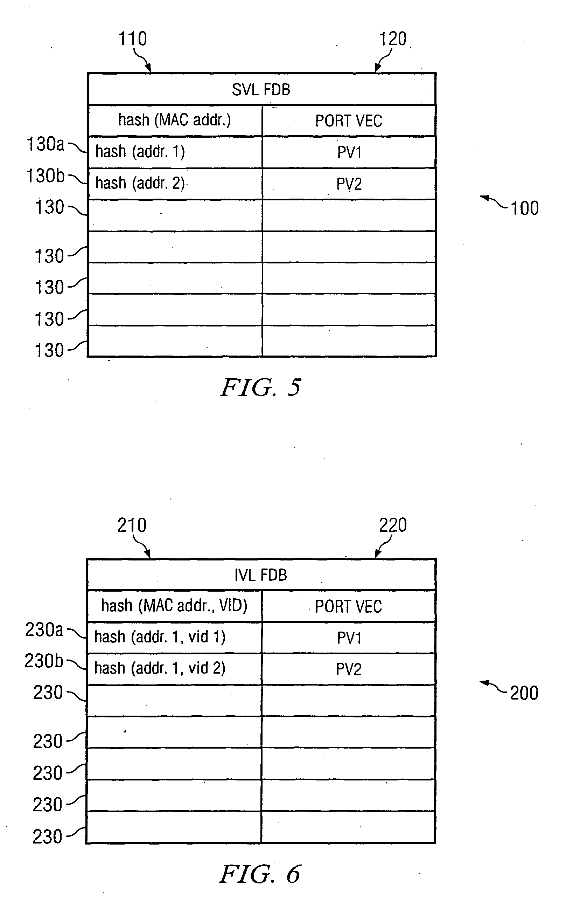

FIGURES 5 and 6 illustrate portions of example forwarding databases 100 and 200. Forwarding database 100 is generally referred to as a Shared VLAN Learning (SVL) forwarding database, as described in the IEEE 802.1Q standard. In an SVL, a switch's forwarding database does not distinguish, for routing purposes, among multiple VLANs in a set of VLANs. Forwarding database 200 is generally referred to as an Independent VLAN Learning (IVL) forwarding database, as described in the IEEE 802.1Q standard. In an IVL, a switch's forwarding database does distinguish among VLANs for routing purposes. Forwarding database 100 and 200 are generally referred to as SVL-only and IVL-only databases, respectively. However, combinations of SVL and IVL can also take place such that a forwarding database may not distinguish among multiple VLANs in a set of VLANs but may distinguish among multiple sets of VLANs for routing purposes.

Forwarding database 100 of FIGURE 5 comprises columns 110 and 120 and a plurality of rows 130. Each entry in column 110 includes a unique identifier that results from applying a hash function to a particular MAC address. As discussed above, MAC addresses are typically large, and thus, forwarding databases may use a hash function to produce a smaller, unique identifier (a hash result) for each MAC address. The values in column 110 represent these identifiers. It should be noted that, in alternative embodiments, the hash function may be applied to particular MAC addresses and VLAN IDs to produce the unique identifiers. In these embodiments, the hash function may produce unique identifiers that effectively ignore the VLAN ID (i.e. the unique identifiers do not distinguish among VLAN IDs). Alternatively, the hash function may produce unique identifiers that effectively ignore VLAN IDs by being input VLAN IDs set to zero. Because VLAN IDs may not be considered by the hash function (or alternatively, may be effectively ignored by the hash function), database 100 illustrates the values in column 110 as the hash of only the MAC address.

Column 120 identifies the particular output ports from which packets with the particular unique identifiers (i.e. MAC addresses) of column 110 are to be transmitted ("port vectors"). Thus, in the example embodiment, a packet with the unique identifier represented by "hash(addr1)" is to be transmitted from output port one. A packet with the unique identifier represented by "hash(addr2)" is to be transmitted from output port two. Although a different output port corresponds to each unique identifier in column 110 in the illustrated database 100, each unique identifier may correspond to any suitable output port, and multiple unique identifiers may correspond to the same output port. Rows 130 are entries corresponding to each unique identifier of column 110, which may serve as an index to each row in the table. It should be noted that, although database 100 shows only two columns, database 100 may include any suitable number of columns, including, for example, columns for storing time stamp information and miscellaneous flags.

In operation, after a packet is received at a switch, a hash table in the switch receives packet header information including the packet's MAC address (and optionally VLAN ID). The hash table may include, be included in, or otherwise be associated with forwarding database 100 and/or routing module 36. The hash table applies a hash function to the packet's MAC address to create an index. In alternative embodiments, the packet's VLAN ID may also be input to the hash function; however, in these embodiments, the hash function may produce an index that effectively ignores the VLAN ID input. Alternatively, the hash function may produce an index that effectively ignores the VLAN ID by being input a VLAN ID set to zero (i.e., index = hash(MAC address, 0)). The index is then used by the hash table to look up the identifier that corresponds to the index in column 110 of database 100. After finding the identifier in column 110, the hash table identifies the port vector in column 120 of the same row 130. The hash table thereby identifies an output port from which the packet is to be transmitted. The packet is then transmitted from the identified output port. As can be observed, example forwarding database 100 does not take into account the VLANs that may be associated with particular packets. Thus, packets with the same MAC address but associated with different VLANs are necessarily forwarded to the same port in the example SVL-only database 100.

Forwarding database 200 of FIGURE 6 comprises columns 210 and 220 and a plurality of rows 230. Each entry in column 210 includes a unique identifier that results from applying a hash function to a particular MAC address and VLAN ID. Thus, the same MAC address may have different unique identifiers in column 210 for each unique combination of MAC address and VLAN ID. For example, in rows 230a and 230b, the same MAC address has different unique identifiers, represented by "hash(addr1, vid1)" and "hash(addr1, vid2)," for different associated VLAN IDs. It should be noted, however, that, in particular cases, a MAC address may have the same unique identifier for each associated VLAN ID, if, for example, the hash function so provides.

Column 220 identifies the particular output ports from which packets with the particular unique identifiers of column 210 are to be transmitted ("port vectors"). Thus, in the example embodiment, a packet with the unique identifier represented by "hash(addr1, vid1)" is to be transmitted from output port one. A packet with the unique identifier represented by "hash(addr2, vid2)" is to be transmitted from output port two. Although a different output port corresponds to each unique identifier in column 210 in the illustrated database 200, each unique identifier may correspond to any suitable output port, and multiple unique identifiers may correspond to the same output port. Rows 230 are entries corresponding to each unique identifier of column 210, which may serve as an index to each row in the table. It should be noted that, although database 200 shows only two columns, database 200 may include any suitable number of columns, including, for example, columns for storing time stamp information and miscellaneous flags.

In operation, after a packet is received at a switch, a hash table in the switch receives information associated with the packet including the packet's MAC address and VLAN ID. The hash table may include, be included in, or otherwise be associated with forwarding database 200 and/or routing module 36. The hash table applies a hash function to the packet's MAC address and VLAN ID to create an index. The index is then used by the hash table to look up the identifier that corresponds to the index in column 210 of database 200. After finding the identifier in column 210, the hash table identifies the port vector in column 220 of the same row 230. The hash table thereby identifies an output port from which the packet is to be transmitted. The packet is then transmitted from the identified output port. As can be observed, example forwarding database 200 takes into account the VLANs that may be associated with particular packets in routing the packets to output ports.

Like example database 200 (and also SVL-IVL combination databases), typical forwarding databases may consider VLAN IDs by using a hash of a packet's MAC address and VLAN ID to create identifiers which correspond to particular output ports. Unfortunately, the hash used in many of these typical switches produces large hash results that may inefficiently consume forwarding database resources. Inefficiently consuming database resources may limit the number of entries storable in a forwarding database and/or increase the required size of the forwarding database. As more MAC addresses and VLANs continue to be added to networks (and as different packet characteristics are considered by forwarding databases in routing packets), efficient use of forwarding database resources is desirable. Thus, a need exists for a different forwarding database that can use memory resources more efficiently.

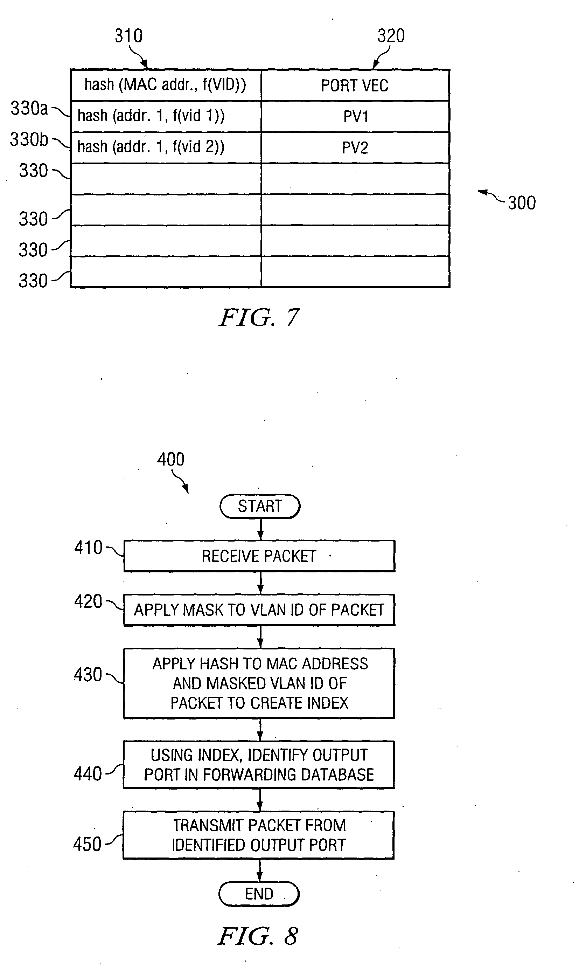

FIGURE 7 illustrates another example forwarding database 300 according to a particular embodiment of the invention. Forwarding database 300 comprises columns 310 and 320 and a plurality of rows 330. Each entry in column 310 includes a unique identifier that results from applying a hash (i.e. a function) to a particular MAC address and to a masked VLAN ID (represented by "f (VID)"). Using a masked VLAN ID, as described below, reduces the memory resources needed to store entries in database 300 since the masked VLAN ID is smaller than an unmasked VLAN ID. The same MAC address may have different unique identifiers in column 310 for each different associated masked VLAN ID value. For example, in rows 330a and 330b, the same MAC address has different unique identifiers, represented by "hash (addr1, f(vid1))" and "hash(addr1, f(vid2))," for each different associated masked VLAN ID. It should be noted, however, that, in particular cases, a MAC address may have the same unique identifier for each associated masked VLAN ID, if, for example, the hash function so provides.

A VLAN ID typically has a size of twelve bits. The use of twelve bits allows for the creation of 4096 different VLAN IDs. However, in many cases, this is more VLAN IDs than what is actually needed for the number of VLANs in a typical network. A mask may thus be applied to a VLAN ID to reduce the size of a VLAN ID. Reducing the size of a VLAN ID may, in turn, reduce the size of the hash result of the hash of the MAC address and VLAN ID. These smaller sized results may, in turn, reduce the memory resources required for each entry in database 300.

In particular embodiments, f(VID) could equal the combination of the VLAN ID and a particular mask. Applying a mask to a bit sequence generally produces a shorter bit sequence that includes only some of the bit values in the original bit sequence. For example, applying a mask to a twelve bit VLAN ID could produce a shorter masked VLAN ID including only a subset of the bit values in the VLAN ID (e.g., only four particular bits of the twelve bits). A mask may thus produce a smaller bit sequence than the bit sequence to which the mask is applied. It should be noted that in this description, as well as in the following claims, a mask may also generally refer to any other suitable hash function or other technique to reduce the size of a VLAN ID.

In particular embodiments, the mask bits could be set as 0x00f (in these embodiments, f(VID) = VID & 0x000f), reducing the effective VLAN ID bits from twelve to four. For example, assume that the twelve bit VLAN ID is "000010101111." Setting the mask bits as 0x00f and applying the mask to the VLAN ID would produce the masked VLAN ID of 1111 (or 0xf). In particular embodiments, the mask could be specified by a network operator, depending on the configuration of the operator's network. In alternative embodiments, the mask could be specified by network software.

It should be noted that, when using a mask, the number of VLANs that can be taken into account by forwarding database 300 is reduced. As an example only and not by way of limitation, assume that a masked VLAN ID has only four bits, corresponding to only sixteen possible unique VLAN IDs, and that VLAN IDs are being masked in this manner at the forwarding database of a switch. If packets associated with more than sixteen VLANs are being processed at the forwarding database, then packets of one or more VLANs are being treated the same as packets of one or more other VLANs (assuming these packets have the same MAC address). The mask is ignoring one or more bits that differentiate particular VLAN IDs from other particular VLAN IDs. Thus, network operators may benefit from tailoring the mask to their particular network configuration (i.e., to the VLAN IDs being used). In a data center environment where VLAN ID mapping may be chosen in a systematic way, network operators may be able to tailor the mask to network needs accurately. If the VLAN IDs being used cannot be controlled, the network operator may face some difficulties in applying a suitable mask.

Referring again to FIGURE 7, column 320 identifies the particular output ports from which packets with the particular unique identifiers of column 310 are to be transmitted (port vectors). Thus, in the illustrated embodiment, a packet with the unique identifier represented by "hash(addr1, f(vid1)" is to be transmitted from output port one. A packet with the unique identifier represented by "hash(addr2, f(vid2))" is to be transmitted from output port two. Although a different output port corresponds to each unique identifier in column 310 in the illustrated example database 300, each unique identifier may correspond to any suitable output port, and multiple unique identifiers may correspond to the same output port. Rows 330 are entries corresponding to each unique identifier of column 310. It should be noted that, although database 300 shows only two columns, database 300 may include any suitable number of columns, including, for example, columns for storing time stamp information and miscellaneous flags.

In operation, a packet is received at a switch. After the packet is received, a hash table in the switch may receive information associated with the packet including the packet's MAC address and VLAN ID. The hash table may include, be included in, or otherwise be associated with forwarding database 300 and/or a routing module 36. The hash table applies a mask to the packet's VLAN ID to produce a masked VLAN ID. The hash table then applies a hash function to the packet's MAC address and the masked VLAN ID to create an index. The index is then used by the hash table to look up the identifier that corresponds to the index in column 310 of database 300. After finding the identifier in column 310, the hash table identifies the port vector in column 320 of the same row 330. The hash table thereby identifies an output port from which the packet is to be transmitted. The packet is then transmitted from the identified output port. As can be observed, example forwarding database 300 takes into account the VLANs that may be associated with particular packets. In addition, forwarding database resources are managed effectively.

Modifications, additions, or omissions may be made to the systems and methods described without departing from the scope of the disclosure. The components of the systems and methods described may be integrated or separated according to particular needs. Moreover, the operations of the systems and methods described may be performed by more, fewer, or other components without departing from the scope of the present disclosure.

FIGURE 8 is a flowchart illustrating an example method 400 for managing forwarding database resources according to a particular embodiment of the invention. Method 400 begins at step 410, where a packet is received at a switch. As the packet is received, information associated with the packet including the packet's MAC address and VLAN ID may be forwarded to and received by, for example, a hash table in routing module 36. The hash table may include, be included in, or otherwise be associated with a forwarding database. At step 420, a mask is applied to the packet's VLAN ID to produce a masked VLAN ID. At step 430, a hash function is applied to the packet's MAC address and the masked VLAN ID to create an index. At step 440, the index is used to look up an identifier that corresponds to the index in a forwarding database. After finding the identifier, a port vector in the forwarding database corresponding to the identifier is identified. An output port from which the packet is to be transmitted is thereby identified by the hash table. At step 450, the packet is transmitted from the identified output port.

Modifications, additions, or omissions may be made to the systems and methods described without departing from the scope of the disclosure. The components of the systems and methods described may be integrated or separated according to particular needs. Moreover, the operations of the systems and methods described may be performed by more, fewer, or other components without departing from the scope of the present disclosure.

Although the present disclosure has been described with several embodiments, sundry changes, substitutions, variations, alterations, and modifications can be suggested to one skilled in the art, and it is intended that the disclosure encompass all such changes, substitutions, variations, alterations, and modifications falling within the spirit and scope of the appended claims.

**Claims**

1.   A method for switching, comprising:

receiving a packet at an input port of a switch, the packet associated with a virtual local area network identifier (VLAN ID) and a Media Access Control (MAC) address, the switch comprising a forwarding database and a plurality of output ports;
masking the VLAN ID to create a masked VLAN ID comprising fewer bits than the VLAN ID associated with the packet;
applying a function to the MAC address and the masked VLAN ID to generate an index;
at the forwarding database, using the index to identify an output port of the switch; and
transmitting the packet from the identified output port.

2.   The method of Claim 1, wherein the received packet includes the VLAN ID and MAC address in its header.

3.   The method of Claim 1, wherein masking the VLAN ID comprises selecting bit values from a particular subset of the bits in the VLAN ID, the masked VLAN ID including only the selected bit values.

4.   The method of Claim 1, further comprising selecting a masking such that a unique masked VLAN ID corresponds to each VLAN in a network.

5.   The method of Claim 1, wherein the function comprises a hash function.

6.   The method of Claim 1, wherein a hash table is used to apply the function to the MAC address and the VLAN ID to generate the index, wherein the hash table is further used to identify the output port of the switch using the index.

7.   Logic encoded in a computer-readable medium, the logic operable when executed by a computer to:

receive a packet at an input port of a switch, the packet associated with a virtual local area network identifier (VLAN ID) and a Media Access Control (MAC) address, the switch comprising a forwarding database and a plurality of output ports;
mask the VLAN ID to create a masked VLAN ID comprising fewer bits than the VLAN ID associated with the packet; '
apply a function to the MAC address and the masked VLAN ID to generate an index;
at the forwarding database, use the index to identify an output port of the switch; and
transmit the packet from the identified output port.

8.   The logic of Claim 7, wherein the received packet includes the VLAN ID and MAC address in its header.

9.   The logic of Claim 7, wherein masking the VLAN ID comprises selecting bit values from a particular subset of the bits in the VLAN ID, the masked VLAN ID including only the selected bit values.

10.  The logic of Claim 7, further operable when executed to select a masking such that a unique masked VLAN ID corresponds to each VLAN in a network.

11.  The logic of Claim 7, wherein the function comprises a hash function.

12.  The logic of Claim 7, wherein a hash table is used to apply the function to the MAC address and the VLAN ID to generate the index, wherein the hash table is further used to identify the output port of the switch using the index.

13.  A switch, comprising:

at least one input port configured to receive a packet, the packet associated with a virtual local area network identifier (VLAN ID) and a Media Access Control (MAC) address;
a routing module configured to:

mask the VLAN ID to create a masked VLAN ID comprising fewer bits than the VLAN ID associated with the packet;
apply a function to the MAC address and the masked VLAN ID to generate an index; and

  use the index to identify an output port of the switch; and

  a plurality of output ports, a particular output port configured to transmit the packet from the switch if the particular output port is the identified output port.

**14.** The system of Claim 13, wherein the received packet includes the VLAN ID and MAC address in its header.

**15.** The system of Claim 13, wherein masking the VLAN ID comprises selecting bit values from a particular subset of the bits in the VLAN ID, the masked VLAN ID including only the selected bit values.

**16.** The system of Claim 13, wherein the function comprises a hash function.

**17.** The system of Claim 13, wherein the switch further comprises a hash table configured to apply the function to the MAC address and the VLAN ID to generate the index, wherein the hash table is further configured to use the index to identify the output port of the switch.

**18.** A forwarding database in a switch, comprising:

  a plurality of hash values, each hash value the result of the hash of a Media Access Control (MAC) address and a masked virtual local area network identifier (VLAN ID); and
  a plurality of port vectors, each port vector identifying an output port of a switch and associated with at least one of the hash values.

10

14                          14                          14

SERVER          SERVER          SERVER
SYSTEM          SYSTEM    o o o SYSTEM

22              22                          22

16 ~ STORAGE
      SYSTEM        SWITCH      SWITCH   o o o   SWITCH

16 ~ STORAGE
      SYSTEM
        o
        o
        o
                   SWITCH      SWITCH   o o o   SWITCH
16 ~ STORAGE
      SYSTEM
                22              22                          22
                                              INTERCONNECT

        12

*FIG. 1*

                        NETWORK          ROUTING
                        SYSTEM           SYSTEM   ~ 20

                           18         TO OTHER NETWORK

22 ~

        24              26              24

        PORT                            PORT

        PORT            SWITCH          PORT
                        CORE
        24     o    .             .  o
          .    o    .             .  o   24
               o             .       o
        PORT                            PORT

        24              SWITCH          24

*FIG. 2*

FIG. 3

FIG. 4

| SVL FDB | |
|---|---|
| hash (MAC addr.) | PORT VEC |
| hash (addr. 1) | PV1 |
| hash (addr. 2) | PV2 |
| | |
| | |
| | |
| | |
| | |

*FIG. 5*

| IVL FDB | |
|---|---|
| hash (MAC addr., VID) | PORT VEC |
| hash (addr. 1, vid 1) | PV1 |
| hash (addr. 1, vid 2) | PV2 |
| | |
| | |
| | |
| | |
| | |

*FIG. 6*

| hash (MAC addr., f(VID)) | PORT VEC |
|---|---|
| hash (addr. 1, f(vid 1)) | PV1 |
| hash (addr. 1, f(vid 2)) | PV2 |
| | |
| | |
| | |
| | |
| | |

310 ↗    320 ↘

330a, 330b, 330, 330, 330, 330

← 300

**FIG. 7**

400

START

410 — RECEIVE PACKET

420 — APPLY MASK TO VLAN ID OF PACKET

430 — APPLY HASH TO MAC ADDRESS AND MASKED VLAN ID OF PACKET TO CREATE INDEX

440 — USING INDEX, IDENTIFY OUTPUT PORT IN FORWARDING DATABASE

450 — TRANSMIT PACKET FROM IDENTIFIED OUTPUT PORT

END

**FIG. 8**

**European Patent Office**

## EUROPEAN SEARCH REPORT

Application Number

EP 07 01 0676

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/023732 A (INFINEON TECHNOLOGIES AG [DE]; MISHRA SHRIDHAR MUBARAQ [US]; ARDHANARI) 18 March 2004 (2004-03-18) * the whole document *<br>----- | 1-18 | INV.<br>H04L12/56<br>H04L12/46 |
| A | EP 1 130 854 A2 (CIT ALCATEL [FR]) 5 September 2001 (2001-09-05) * paragraph [0015] *<br>----- | 1-18 | |
| A | IEEE COMPUTER SOCIETY: "802.1Q: IEEE Standards for Local and metropolitan area networks-Virtual Bridged Local Area Networks, 2003 Edition" IEEE STD 802.1Q, XX, XX, 7 May 2003 (2003-05-07), pages I-II,2,7, XP002399308 * the whole document *<br>----- | 1-18 | |
| | | | TECHNICAL FIELDS SEARCHED (IPC)<br><br>H04L |

The present search report has been drawn up for all claims

| Place of search | Date of completion of the search | Examiner |
|---|---|---|
| The Hague | 10 August 2007 | Perrier, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 0676

This annex lists the patent family members relating to the patent documents cited in  the above-mentioned European search report.
The members are as contained in the European Patent Office EDP file on
The European Patent Office is in no way liable for these particulars which are merely given for the purpose of information.

10-08-2007

| Patent document cited in search report | | Publication date | Patent family member(s) | | Publication date |
|---|---|---|---|---|---|
| WO 2004023732 | A | 18-03-2004 | AU | 2002334573 A1 | 29-03-2004 |
| EP 1130854 | A2 | 05-09-2001 | AT | 269618 T | 15-07-2004 |
|  |  |  | CN | 1312631 A | 12-09-2001 |
|  |  |  | DE | 60103789 D1 | 22-07-2004 |
|  |  |  | DE | 60103789 T2 | 14-07-2005 |
|  |  |  | ES | 2223653 T3 | 01-03-2005 |
|  |  |  | JP | 2001292155 A | 19-10-2001 |
|  |  |  | US | 6862280 B1 | 01-03-2005 |

EPO FORM P0459

For more details about this annex : see Official Journal of the European Patent Office, No. 12/82